Europäisches Patentamt

European Patent Office

Office européen des brevets

(19)

(11) Veröffentlichungsnummer: **0 263 269**
**B1**

(12) **EUROPÄISCHE PATENTSCHRIFT**

(45) Veröffentlichungstag der Patentschrift:
**10.10.90**

(51) Int. Cl.⁵: **F16B 13/08**

(21) Anmeldenummer: **87111741.2**

(22) Anmeldetag: **13.08.87**

(54) Spreizdübel für die Verankerung in konisch nach innen erweitert hergestellten Bohrlöchern.

(30) Priorität: **09.10.86 DE 3634431**

(43) Veröffentlichungstag der Anmeldung:
**13.04.88 Patentblatt 88/15**

(45) Bekanntmachung des Hinweises auf die Patenterteilung:
**10.10.90 Patentblatt 90/41**

(84) Benannte Vertragsstaaten:
**AT BE CH ES FR GB IT LI NL**

(56) Entgegenhaltungen:
**EP-A- 0 172 547**
**EP-A- 0 195 188**
**CH-A- 503 209**
**DE-B- 1 221 056**
**DE-U- 8 535 263**
**FR-A- 1 326 065**

(73) Patentinhaber: **fischer-werke Artur Fischer GmbH & Co.
KG, Weinhalde 14-18,
D-7244 Waldachtal 3/Tumlingen(DE)**

(72) Erfinder: **Fischer, Arthur, Prof. Dr. h. c., Weinhalde 34,
D-7244 Waldachtal 3/Tumlingen(DE)**

**Beschreibung**

Die Erfindung betrifft einen Spreizdübel für die Verankerung in konisch nach innen erweitert hergestellten Bohrlöchern, bestehend auf einem am Bohrlochgrund sich abstützenden, einen Spreizkonus aufweisenden Bolzen vorzugsweise mit Außengewinde, auf dessen Spreizkonus eine über einen Teil ihrer Länge mit Längsschlitzen versehene Spreizhülse auftreibbar ist.

Ein derartiger Spreizdübel ist aus der EP-A 0 195 188 bekannt.

Durch konisch erweiterte Bohrlöcher ist es möglich, nahezu spreizdruckfreie Verankerungen durchzuführen, die aufgrund der erhöhten Aufspreizung der Spreizhülse Haltewerte erbringen, die selbst bei Rißbildung im Beton nur unwesentlich verringert werden. Für die Herstellung solcher konisch erweiterter Bohrlöcher ist eine Bohrvorrichtung bekannt, die ein Ausschwenken des Bohrers nach Erreichen der gewünschten Bohrlochtiefe zuläßt. Als besonders zweckmäßig, insbesondere für die Aufspreizung des Spreizdübels, hat sich eine konisch nach innen erweiternde Hinterschneidung erwiesen, die einen Bohrer mit zum Schaft hin abgeschrägten Seitenschneiden erforderlich macht. Aufgrund der abgeschrägten Seitenschneiden ergibt sich allerdings eine Verschlechterung der Bohrerführung. Dies kann unter Umständen zu unrunden und krummen Bohrlöchern führen, was wiederum das Eintreiben des Spreizdübels in ein solches Bohrloch erheblich erschwert und in Einzelfällen gar unmöglich macht.

Aus der EP-A 0 172 547 ist ein Spreizdübel bekannt, an dessen Hülse oder Bolzen ein Schneidring aufgesetzt ist, der die Aufgabe hat, beim Eintreibvorgang des Dübels ein konisches Loch zu schaffen. Da allerdings dieser gehärtete Ring sich nicht an der vorderen Stirnseite des Spreizdübels befindet, wird ein Eintreiben des Spreizdübels in unrunde oder krumme Bohrlöcher erschwert, da es zu Verklemmungen kommen kann.

Der Erfindung liegt die Aufgabe zugrunde, den eingangs erwähnten Spreizdübel derart zu verbessern, daß auch bei unrunden und krummen Bohrlöchern ein leichtes Eintreiben des Spreizdübels in das Bohloch möglich ist.

Erfindungsgemäß wird dies dadurch erreicht, daß in flächiger Anlage an die vordere Stirnseite des Bolzens eine gehärtete Scheibe mit einem dem Außendurchmesser der Spreizhülse entsprechenden Durchmesser befestigt ist, deren vordere Stirnkante scharfkantig ist.

Durch die auf die Stirnseite des Bolzens aufgesetzte gehärtete Scheibe wird beim Eintreiben des Spreizdübels das Bohrloch durch die als Schneide dienende Stirnkante der Scheibe auf den Durchmesser der Spreizhülse ausgerieben. Die scharfkantige Stirnkante der Scheibe schabt vorstehende Riefen, Vorsprünge und dgl. mit geringstem Schlagaufwand ab, so daß die nachfolgende Spreizhülse ohne wesentliche Reibung in das Bohrloch einschiebbar ist. Nach dem Aufsitzen des Bolzens auf dem Bohrlochgrund wird dann die Spreizhülse mit einem hülsenförmigen Einschlaggerät auf den Spreizkonus des Bolzens zur Verankerung des Spreizdübels aufgetrieben.

In einer weiteren Ausgestaltung der Erfindung kann die Scheibe auf einem zylindrischen Ansatz des Bolzens durch Klemmung und/oder durch Vernietung gehalten sein. Durch diese Art der Befestigung wird die Scheibe auf der Stirnseite des Bolzens verkantfrei gehalten.

In der Zeichnung ist ein Ausführungsbeispiel der Erfindung dargestellt.

Es zeigen:

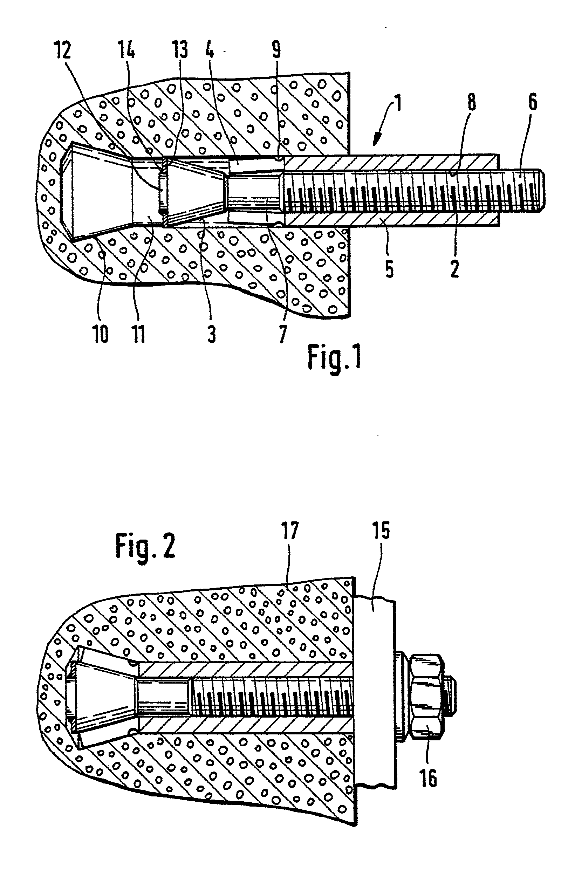

Figur 1 den Spreizdübel beim Eintreiben in das Bohrloch

Figur 2 den verankerten Spreizdübel

Der Spreizdübel 1 besteht aus dem Stehbolzen 2 mit kegelförmigem Spreizkonus 3 und der über einen Teil ihrer Länge mit Längsschlitzen 4 versehenen Spreizhülse 5. Der Stehbolzen 2 weist eine über einen Teil seiner Länge verlaufendes Außengewinde 6 auf, das in einem Abstand vom Spreizkonus 3 endet. Dieser zwischen dem Gewinde 6 und dem Spreizkonus 3 liegende Schaft 7 des Stehbolzens besitzt einen Durchmesser, der etwas geringer ist als der Gewindeaußendurchmesser. Über den Stehbolzen 2 ist die Spreizhülse 5 gestülpt, deren Innenbohrung 8 etwa dem Gewindeaußendurchmesser des Stehbolzens 2 entspricht. Die durch die umlaufende Nut 9 begrenzten Spreizlamellen der Spreizhülse 5 sind auf den im Durchmesser reduzierten Schaft 7 des Stehbolzens bis zur Anlage der inneren Stirnkante eingedrückt. Damit ergibt sich eine Anlaufschräge, die das Einführen des Befestigungselements in das mit einer konisch nach innen sich erweiternden Hinterschneidung 10 versehene Bohrloch 11 erleichtert. Die vordere Stirnseite des Stehbolzens 2 ist mit einem zylindrischen Ansatz 12 versehen, auf den eine gehärtete Scheibe 13 aufgeklemmt und durch zusätzliche Nietnasen 14 gehalten ist. Der Außendurchmesser der gehärteten Scheibe 13 entspricht oder ist geringfügig größer als der Außendurchmesser der Spreizhülse 5. Die vordere Stirnkante der Scheibe 13 ist scharfkantig ausgeführt, um eine günstige Schabwirkung zu erreichen.

Nach der Erstellung des Bohrloches 11 mit der Hinterschneidung 10 wird der Spreizdübel 1 durch Schläge auf den Stehbolzen 2 in das Bohrloch eingetrieben. Dabei wird der zylindrische Teil des Bohrloches durch die auf der Stirnseite des Stehbolzens 2 angeordnete gehärtete Scheibe 13 ggf. soweit ausgeschabt, daß die Spreizhülse 5 ohne größere Reibung in das Bohrloch 11 einschiebbar ist. Nach dem Aufsitzen des Stehbolzens 2 auf dem Bohrlochgrund wird die Spreizhülse 5 mittels einer Einschlaghülse auf den Spreizkonus 3 des Stehbolzens 2 aufgetrieben. Dabei dringen die Spreizlamellen der Spreizhülse 5 in den zwischen Spreizkonus 3 und Hinterschneidung 10 des Bohrloches 11 gebildeten Spalt ein. Nach der Verankerung des Spreizdübels 1 wirde auf den die Mauerwerksoberfläche überragenden Stehbolzen 2 der zu befestigende Gegenstand 15 aufgesteckt und mittels einer Mutter 16 am Mauerwerk 17 verspannt.

**Patentansprüche**

1. Spreizdübel für die Verankerung in konisch nach innen erweitert hergestellten Bohrlöchern, bestehend aus einem am Bohrlochgrund sich abstützenden, einen Spreizkonus aufweisenden Bolzen vorzugsweise mit Außengewinde, auf dessen Spreizkonus eine über einen Teil ihrer Länge mit Längsschlitzen versehene Spreizhülse auftreibbar ist, dadurch gekennzeichnet, daß in flächiger Anlage an die vordere Stirnseite des Bolzens eine gehärtete Scheibe mit einem dem Außendurchmesser der Spreizhülse entsprechenden Durchmesser befestigt ist, deren vordere Stirnkante scharfkantig ist.

2. Spreizdübel nach Anspruch 1, dadurch gekennzeichnet, daß die Scheibe auf einem zylindrischen Ansatz des Bolzens durch Klemmung und/oder durch Vernietung gehalten ist.

**Claims**

1. Expansible plug for anchoring in drilled holes that are made to widen conically inwards, comprising a bolt, preferably with an external thread, which has an expander cone and is supported at the base of the drilled hole, it being possible for an expansible sleeve that is provided with longitudinal slots over part of its length to be driven onto the expander cone of the bolt, characterised in that a hardened disc having a diameter that corresponds to the outside diameter of the expansible sleeve, and having a sharp front edge, is secured to the front end face of the bolt in such a manner that it lies flat against the front end face of the bolt.

2. Expansible plug according to claim 1, characterised in that the disc is held on a cylindrical projection of the bolt by clamping and/or by riveting.

**Revendications**

1. Cheville à expansion pour l'ancrage dans des trous forés réalisés de manière à présenter un élargissement en forme de cône vers l'intérieur, cheville consistant en un goujon s'appuyant sur le fond du trou foré, présentant un cône d'expansion, de préférence muni d'un filetage extérieur, sur le cône d'expansion duquel peut être poussé un manchon d'expansion présentant des fentes longitudinales sur une partie de sa longueur, cheville caractérisée en ce qu'un disque trempé, dont le diamètre extérieur correspond au diamètre du manchon d'expansion et dont l'arête frontale avant est aiguë, est fixé en appui à plat contre le côté frontal avant du goujon.

2. Cheville à expansion selon la revendication 1, caractérisée en ce que le disque est maintenu, par blocage et/ou par rivetage, sur un relief cylindrique du goujon.

**Fig. 1**

**Fig. 2**